# EUROPEAN PATENT SPECIFICATION

(11) **EP 3 660 810 B1**
(45) Date of publication and mention of the grant of the patent: **22.12.2021**
(21) Application number: 17918737.2
(22) Date of filing: 27.07.2017
(51) Int. Cl.: B60W 30/095, G08G 1/16, G01C 21/26, B60W 30/18, G06K 9/00, B60W 10/04, B60W 10/18, B60W 10/20, B60W 60/00

(54) **RIGHT-LEFT TURN DETERMINATION DEVICE AND RIGHT-LEFT TURN DETERMINATION METHOD FOR DRIVE ASSIST VEHICLE**
VORRICHTUNG ZUR BESTIMMUNG VON RECHTS-LINKS-ABBIEGEN UND VERFAHREN ZUR BESTIMMUNG VON RECHTS-LINKS-ABBIEGEN FÜR FAHRASSISTENZFAHRZEUG
DISPOSITIF DE DÉTERMINATION DE VIRAGE À DROITE-GAUCHE ET PROCÉDÉ DE DÉTERMINATION DE VIRAGE À DROITE-GAUCHE DESTINÉS À UN VÉHICULE D'ASSISTANCE À LA CONDUITE

(43) Date of publication of application: 03.06.2020
(73) Proprietor: Nissan Motor Co., Ltd., Yokohama-shi, Kanagawa 221-0023 (JP)
(72) Inventor: NOJIRI, Takahiro, Atsugi-shi Kanagawa 243-0123 (JP); SHINO, Tatsuya, Atsugi-shi Kanagawa 243-0123 (JP); DEGAWA, Katsuhiko, Atsugi-shi Kanagawa 243-0123 (JP)
(74) Representative: Global IP Europe Patentanwaltskanzlei
(86) International application number: PCT/JP2017/027258
(87) International publication number: WO 2019/021422

(56) References cited:
- WO-A1-2017/013749
- JP-A- 2005 231 450
- JP-A- 2009 031 968
- JP-A- 2009 116 692

## Description

### Technical Field

The present invention relates to a method and a right-left turn determination device for a drive-assisted vehicle.

### Background Technology

In the prior art, there are known left/right turn determination methods in which a display prompting an oncoming vehicle to make a right or left turn is performed when the oncoming vehicle makes a right turn across a traffic lane on which a host vehicle is traveling and the host vehicle is determined to have stopped (for example, see JP 2011-180965 A).

WO 2017/013749 A discloses a right-left turn determination method for a drive-assisted vehicle comprising an onboard sensor that acquires information about a periphery of a host vehicle and host vehicle information, and a controller that performs an allowance determination for right/left-turn travel across an oncoming traffic lane during a stop in which the right/left-turn travel is intended based on the information acquired by the onboard sensor, comprising:
determining as to whether or not the host vehicle has stopped with the right/left-turn travel being intended;
determining as to whether or not there is an oncoming vehicle in an intended travel trajectory of the host vehicle when a right/left-turn stop determination is made for the host vehicle;
determining as to whether or not a far-side oncoming vehicle which is a first vehicle in the oncoming traffic lane has stopped when the oncoming vehicle is determined to not be present in the intended travel trajectory.

### Disclosure of the Invention

### Problems to Be Solved by the Invention

However, these prior-art right/left turn determination methods are techniques in which the host vehicle, which is traveling straight relative to the oncoming vehicle making a right turn, yields a path of forward progress, and whether to allow a straight-traveling vehicle to make a left or right turn is determined. Therefore, nothing is disclosed in regard to determining whether to allow right or left turn travel in a vehicle that is to make a right or left turn across an oncoming traffic lane, and it is conceivable that right or left turn travel at an appropriate timing is not possible.

The present invention was devised with focus on the problem described above, it being an object of the invention to provide a method and right-left turn determination device for a drive-assisted vehicle, whereby determinations of whether to allow right or left turn travel across an oncoming traffic lane can be appropriately made.

### Means Used to Solve the Above-Mentioned Problems

To achieve the object described above, the present invention is a right-left turn determination method for a drive-assisted vehicle, which comprises an onboard sensor that acquires information about a periphery of a host vehicle and host vehicle information, and a controller that performs an allowance determination for right/left-turn travel across an oncoming traffic lane during a stop in which the right/left-turn travel is intended based on the information acquired by the onboard sensor,
the right-left turn determination method for the drive-assisted vehicle comprising:
determining as to whether or not the host vehicle has stopped with the right/left-turn travel being intended;
determining as to whether or not there is an oncoming vehicle in an intended travel trajectory of the host vehicle when a right/left-turn stop determination is made for the host vehicle;
determining as to whether or not a far-side oncoming vehicle which is a first vehicle in the oncoming traffic lane has stopped when the oncoming vehicle is determined to not be present in the intended travel trajectory;
characterized by
determining as to whether or not an adjacent oncoming vehicle in the oncoming traffic lane present on a near side of the intended travel trajectory has stopped when a determination is made that the far-side oncoming vehicle has stopped;
allowing the right/left-turn travel when:
   the far-side oncoming vehicle is determined to have stopped while the host vehicle has stopped with the right/left-turn travel being intended, and
   a determination is made that the adjacent oncoming vehicle has stopped; and
executing the right/left-turn travel.

Moreover, the invention includes a right-left turn determination device in accordance with claim 5.

### EFFECT OF THE INVENTION

Consequently, in the present invention, a determination of whether to allow right/left turn travel across an oncoming traffic lane can be appropriately made.

### Brief Description of the Drawings

Figure 1 is an overall system configuration drawing of a right turn determination system of a first embodiment;
Figure 2 is a flowchart of a flow of a right/left turn control process carried out by a vehicle travel control unit of the first embodiment;
Figure 3 is a flowchart of a flow of right/left turn control of a comparative example;
Figure 4 is a diagram of a situation at an intersection at which a host vehicle is in a stopped state with right turn travel being intended; and
Figure 5 is a diagram of a situation at an intersection at which a drive-assisted vehicle in which the right/left turn determination method of the first embodiment is applied is in a stopped state with right turn travel being intended.

### Preferred Embodiments of the Invention

A preferred embodiment for carrying out the method and right-left turn determination device for a drive-assisted vehicle of the present invention is described below based on the first embodiment shown in the drawings.

### [First Embodiment]

First, the configuration shall be described. The right/left turn determination method and right/left turn determination device in the first embodiment are applied to a drive-assisted vehicle which is equipped with a right turn determination system that determines whether to allow a right turn when right turn travel across an oncoming traffic lane is intended, and which is capable of autonomous driving in which right turn travel is automatically executed when a right turn is allowed. The description of the configuration of the first embodiment below is divided into "Overall system configuration of right turn determination system," "Detailed configuration of right turn determination control unit," and "Configuration of right turn control process."

### [Overall System Configuration of the Right Turn Determination System]

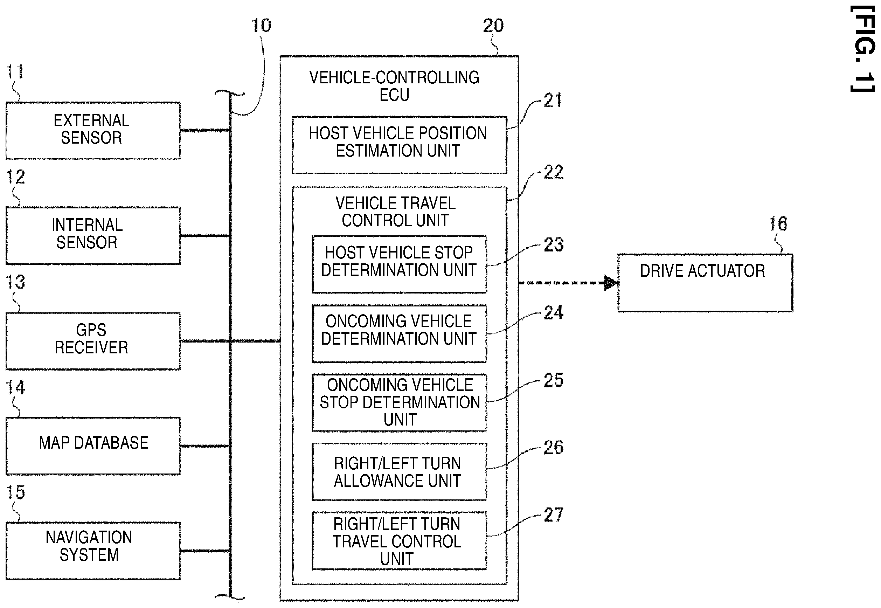

A right turn determination system 1 of the first embodiment is provided with an external sensor 11, an internal sensor 12, a GPS receiver 13, a map database 14, and a navigation system 15, as shown in Figure 1. The system is further provided with a vehicle-controlling ECU 20 and a drive actuator 16.

The external sensor 11 is provided to a host vehicle, and is a sensor (onboard sensor) for acquiring information on a periphery of the host vehicle during travel. The external sensor 11 of the first embodiment is a commonly used stereo camera, and acquires information on the periphery of the host vehicle by analyzing photographed image data. The information on the periphery of the host vehicle acquired by the external sensor 11 is outputted to the vehicle-controlling ECU 20 and the navigation system 15 via a CAN communication line 10. Instead of a stereo camera, the external sensor 11 may be Clearance Sonar using ultrasonic waves, a laser range finder using an infrared laser, etc.

The internal sensor 12 is provided to the host vehicle, and is a sensor (onboard sensor) for detecting a traveling state of the host vehicle. In this embodiment, the internal sensor 12 is a vehicle speed sensor, a yaw angle sensor, a steering angle sensor, etc. Host vehicle information indicating the traveling state of the host vehicle acquired by the internal sensor 12 is outputted to the vehicle-controlling ECU 20 and the navigation system 15 via the CAN communication line 10.

The GPS receiver 13 receives signals from three or more GPS satellites, extracts data needed for positioning relying on these signals, and acquires GPS information indicating the position of the host vehicle. The GPS information acquired by the GPS receiver 13 is outputted to the vehicle-controlling ECU 20 and the navigation system 15 via the CAN communication line 10.

The map database 14 is stored in onboard memory (not shown), and is a database provided with map information into which is written: travel information, such as slope and speed limit; road periphery information, such as traffic lights, signs, telephone poles, structures (tunnels, bridges, pedestrian overpasses, etc.), stores, and parking lots; and indicator information, such as white lines and stop lines. The information of the map database 14 is referenced from the vehicle-controlling ECU 20 and the navigation system 15 via the CAN communication line 10.

The navigation system 15 estimates the position of the host vehicle (self-position) on the map using various items of information inputted from the external sensor 11, the internal sensor 12, the GPS receiver 13, and the map database 14. An intended travel route to a destination is generated based on the estimated host position information, destination information set on the map by a driver of the host vehicle, etc. Furthermore, guidance for the generated intended travel route is given to the driver. Travel route information and host position information generated by the navigation system 15 is outputted to the vehicle-controlling ECU 20 via the CAN communication line 10.

The vehicle-controlling ECU 20 is an integrated controller that uses various items of information inputted from the external sensor 11, the internal sensor 12, the GPS receiver 13, the map database 14, the navigation system 15, and the onboard memory (not shown) to output a control command for causing the host vehicle to travel along the intended travel route. The control command outputted from the vehicle-controlling ECU 20 is inputted to the drive actuator 16 as necessary. The vehicle-controlling ECU 20 has a host vehicle position estimation unit 21 and a vehicle travel control unit 22.

The host vehicle position estimation unit 21 estimates the travel position of the host vehicle using the various items of information inputted from the external sensor 11, the internal sensor 12, the GPS receiver 13, the map database 14, and the navigation system 15.

When the host vehicle is determined by the host vehicle position estimation unit 21 to have stopped, the vehicle travel control unit 22 (a controller) determines whether or not this stop is one for which right turn travel across an oncoming traffic lane is intended. When the vehicle is determined to have stopped with right turn travel across an oncoming traffic lane being intended, right turn allowance determination control is performed. In right turn allowance determination control, the various items of information inputted from the external sensor 11, the internal sensor 12, the GPS receiver 13, the map database 14, and the navigation system 15 is used to determine whether or not right turn travel is a possibility for the host vehicle, and a right turn travel allowance is outputted in accordance with the determination result. In the vehicle travel control unit 22, a right turn control signal that causes the host vehicle to make a right turn is outputted when a right turn allowance is outputted.

The drive actuator 16 comprises various actuators that drive an acceleration pedal, a brake, and a steering wheel, which operate the vehicle. The drive actuator 16 is driven based on a travel control command outputted from the vehicle travel control unit 22.

### [Detailed Configuration of the Vehicle Travel Control Unit]

The vehicle travel control unit 22 of the first embodiment has a host vehicle stop determination unit 23, an oncoming vehicle determination unit 24, an oncoming vehicle stop determination unit 25, a right/left turn allowance unit 26, and a right/left turn travel control unit 27, as shown in Figure 1.

From the internal sensor 12, the host vehicle stop determination unit 23 acquires host vehicle information including the speed of the host vehicle and whether or not a turn indicator is being operated. This determination unit also acquires travel route information from the navigation system 15. Based on the host vehicle information and the travel route information, when the vehicle is stopped having reached a speed of zero, this determination unit determines whether or not the stop is one for which right turn travel across an oncoming traffic lane is intended. Specifically, the host vehicle stop determination unit 23 determines whether or not the host vehicle has stopped with right turn travel across an oncoming traffic lane being intended.

The oncoming vehicle determination unit 24 refers to the map database 14 to acquire map information when the vehicle is determined by the host vehicle stop determination unit 23 to have stopped with right turn travel being intended. The oncoming vehicle determination unit 24 also acquires the travel route information from the navigation system 15. This determination unit looks up an intended travel trajectory for the host vehicle during a right turn based on the map information and the travel route information. After having looked up the intended travel trajectory, the oncoming vehicle determination unit 24 acquires oncoming vehicle position information based on periphery information from the external sensor 11, and determines whether or not there is an oncoming vehicle in the intended travel trajectory.

When the oncoming vehicle determination unit 24 has determined that there is no oncoming vehicle on the intended travel trajectory, the oncoming vehicle stop determination unit 25 determines whether or not there is a far-side oncoming vehicle based on the oncoming vehicle position information. When the oncoming vehicle determination unit 24 has determined that there is a far-side oncoming vehicle, the oncoming vehicle stop determination unit 25 determines whether or not this far-side oncoming vehicle has stopped.

When the oncoming vehicle stop determination unit 25 has determined that the far-side oncoming vehicle has stopped, a determination is made as to whether or not a passing action made by the distant oncoming vehicle has been recognized. When a passing action by this far-side oncoming vehicle cannot be recognized, the oncoming vehicle stop determination unit 25 determines whether or not an adjacent oncoming vehicle has stopped. Furthermore, when the oncoming vehicle stop determination unit 25 has determined that the far-side oncoming vehicle has stopped, a determination is made as to whether or not there is a traffic light ahead of the host vehicle based on the travel route information acquired from the navigation system 15 and the periphery information acquired by the external sensor 11. When a determination is made that there is a traffic light, a determination is made as to whether or not there is a recognition of this traffic light being in a green-illuminated state.

In this embodiment, "far-side oncoming vehicle" denotes a first vehicle among oncoming vehicles present on a far side as seen from the host vehicle, relative to the intended travel trajectory cutting across the oncoming traffic lane. "Adjacent oncoming vehicle" denotes a last vehicle among oncoming vehicles present on a near side as seen from the host vehicle, relative to the intended travel trajectory cutting across the oncoming traffic lane, and denotes an oncoming vehicle in a position substantially adjacent to the stopped host vehicle. In other words, the adjacent oncoming vehicle is positioned frontward of the intended travel trajectory, and the far-side oncoming vehicle is positioned rearward of the intended travel trajectory. Furthermore, "passing action" denotes an action done by the driver of the oncoming vehicle, prompting the host vehicle to advance forward, and is a behavior displaying an intent of the driver of the oncoming vehicle to yield the path of forward progress to the host vehicle. For example, the action is a flashing of headlights, a cue by the driver, etc. "Stopped" in this embodiment means that the vehicle speed is zero.

When the far-side oncoming vehicle is determined to have stopped by the oncoming vehicle stop determination unit 25 and a determination has been made that a passing action performed by the far-side oncoming vehicle has been recognized, the right/left turn allowance unit 26 allows right turn travel by the host vehicle and outputs a right turn allowance signal. When the far-side oncoming vehicle is determined to have stopped and the adjacent oncoming vehicle is determined to have stopped, i.e., when both oncoming vehicles frontward and rearward of the intended travel trajectory are determined to have stopped, right turn travel the right/left turn allowance unit 26 allows right turn travel by the host vehicle and outputs a right turn allowance signal.

Furthermore, when a determination is made that there is a traffic light ahead of the host vehicle, and a determination is made that the traffic signal is recognized as being in a green-illuminated state, the right/left turn allowance unit 26 determines whether or not a passing action has been recognized or determines the adjacent oncoming vehicle to be stopped, and outputs a right/left turn allowance signal in accordance with the result. Specifically, when a traffic light is determined to be ahead of the host vehicle, the right/left turn allowance unit 26 does not output a right turn allowance signal if it has not been determined that the traffic light is recognized as being in a green-illuminated state.

The right/left turn allowance unit 26 allows right turn travel of the host vehicle and outputs a right turn allowance signal even when the oncoming vehicle determination unit 24 has determined that no far-side oncoming vehicle is present. The right turn allowance signal is inputted to the right/left turn travel control unit 27.

When a right turn allowance signal is inputted from the right/left turn allowance unit 26, the right/left turn travel control unit 27 outputs a travel control command that causes the host vehicle to travel along the intended travel trajectory and perform right turn travel across the oncoming traffic lane. This travel control command is inputted to the drive actuator 16. In this embodiment, the travel speed during right turn travel when there is determined to be a far-side oncoming vehicle is determined to be present is set to a regulated speed that is slower than a pre-set reference speed. The travel speed during right turn travel when the oncoming vehicle determination unit 24 has determined that no far-side oncoming vehicle is present is set to the pre-set reference speed. Due to this configuration, the travel speed during right turn travel when the oncoming vehicle determination unit 24 has determined that a far-side oncoming vehicle is present is set slower than the travel speed during right turn travel when the oncoming vehicle determination unit 24 has determined that no far-side oncoming vehicle is present, and when a far-side oncoming vehicle is present, right turn travel is performed more slowly than when no far-side oncoming vehicle is present.

### [Configuration of the Right/Left Turn Control Process]

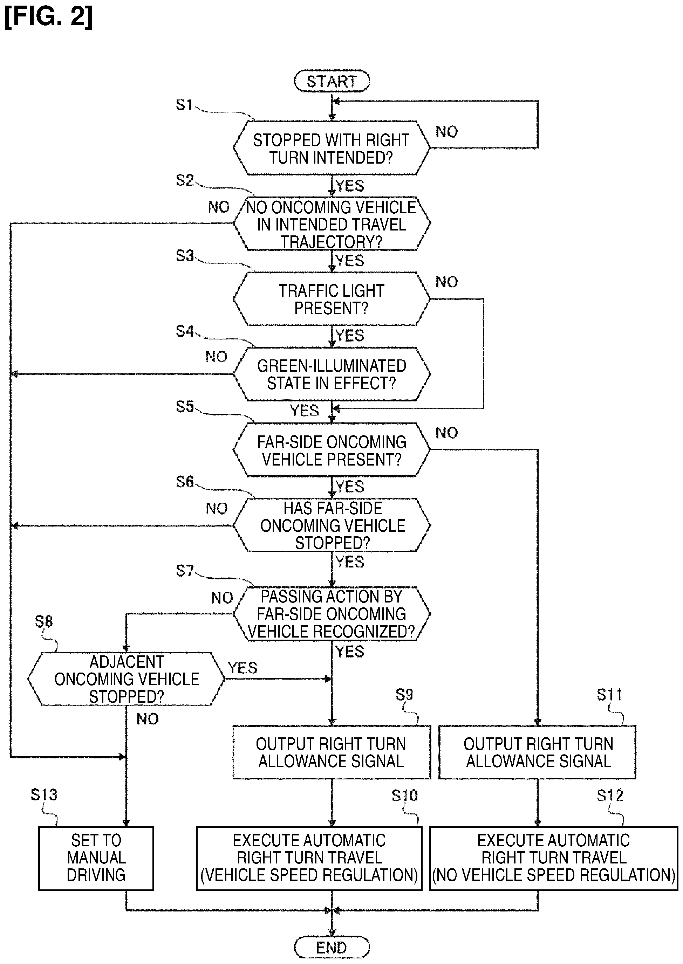

Figure 2 is a flowchart of a flow of a right/left turn control process carried out by the vehicle travel control unit of the first embodiment. The right/left turn control process of the first embodiment is described below based on Figure 2.

In step S1, a determination is made as to whether or not the host vehicle has stopped with right turn travel being intended. When the determination is YES (a stop with a right turn intended), the process advances to step S2. When the determination is NO (not a stop with a right turn intended), it is determined that right turn travel is not intended and step S1 is repeated. In this step, whether or not right turn travel is intended is determined based on the travel intended route, whether or not the turn indicator is in operation, etc. The stop determination is made based on whether or not the speed of the host vehicle is zero as detected by the vehicle speed sensor.

In step S2, in continuation from the determination in step S1 that the oncoming vehicle is stopped with a right turn intended, an intended travel trajectory for the host vehicle during a right turn is looked up, and a determination is made as to whether or not there is no oncoming vehicle on this intended travel trajectory. When the determination is YES (there is no oncoming vehicle), the process advances to step S3. When the determination is NO (there is an oncoming vehicle), there is a possibility of interfering with the travel of the oncoming vehicle on the intended travel trajectory should right turn travel be performed, and the process therefore advances to step S13 on the premise that right turn travel cannot be allowed. In this embodiment, whether or not there is an oncoming vehicle is determined from the position information of the oncoming vehicle acquired based on the periphery information from the external sensor 11.

In step S3, in continuation from the determination in step S2 that there is no oncoming vehicle on the intended travel trajectory, a determination is made as to whether or not there is a traffic light for the host vehicle, ahead of the host vehicle. When the determination is YES (there is a traffic light), the process advances to step S4. When the determination is NO (there is no traffic light), the process advances to step S5. Whether or not there is a traffic light for the host vehicle is determined based on, *inter alia,* the periphery information acquired by the external sensor 11.

In step S4, in continuation from the determination in step S3 that there is a traffic light for the host vehicle, a determination is made as to whether or not this traffic light can be recognized to be in a green-illuminated state. When the determination is YES (green-illuminated state recognized), the process advances to step S5. When the determination is NO (green-illuminated state not recognized), the host vehicle must stop, and the process therefore advances to step S13 on the premise that right turn travel cannot be allowed. In this embodiment, the illuminated state of the traffic light is recognized based on the periphery information acquired by the external sensor 11.

In step S5, in continuation from the determination in step S3 that there is no traffic light for the host vehicle or the determination in step S4 that a green-illuminated state is recognized, a determination is made as to whether or not a far-side oncoming vehicle is present. When the determination is YES (a far-side oncoming vehicle is present), the process advances to step S6. When the determination is NO (no far-side oncoming vehicle is present), the process advances to step S11. In this embodiment, "far-side oncoming vehicle" denotes a vehicle in the oncoming traffic lane located on the far side of the intended travel trajectory. Whether or not there is a far-side oncoming vehicle is determined from the position information of the oncoming vehicle acquired based on the periphery information from the external sensor 11.

In step S6, in continuation from the determination in step S5 that there is a far-side oncoming vehicle, a determination is made as to whether or not the far-side oncoming vehicle has stopped, on the premise that the intended travel trajectory of the far-side oncoming vehicle and the intended travel trajectory of the host vehicle intersect. When the determination is YES (far-side oncoming vehicle stopped), the process advances to step S7. When the determination is NO (far-side oncoming vehicle traveling), the far-side oncoming vehicle has not stopped and there is a possibility of interfering with the traveling of the far-side oncoming vehicle should right turn travel be performed, and the process advances to step S13 on the premise that right turn travel cannot be allowed. In this embodiment, whether or not the far-side oncoming vehicle has stopped is determined from the position information of the oncoming vehicle acquired based on the periphery information from the external sensor 11.

In step S7, in continuation from the determination in step S6 that the far-side oncoming vehicle has stopped, a determination is made as to whether or not a passing action by the far-side oncoming vehicle, which was determined in step S5 to be present, has been recognized. When the determination is YES (passing action recognized), the process advances to step S9. When the determination is NO (no passing action recognized), the process advances to step S8. In this embodiment, whether or not there is a recognition of a passing action is determined based on the periphery information acquired by the external sensor 11.

In step S8, in continuation from the determination in step S7 that there is no recognition of a passing action by the far-side oncoming vehicle, a determination is made as to whether or not the adjacent oncoming vehicle has stopped, on the premise that it is unclear if the far-side oncoming vehicle will continue to be in a stopped state. When the determination is YES (adjacent oncoming vehicle stopped), the process advances to step S9. When the determination is NO (adjacent oncoming vehicle not stopped), there is a possibility that the far-side oncoming vehicle will set off, as well as a possibility of interfering with the traveling of the far-side oncoming vehicle should right turn travel be performed, and the process advances to step S13 on the premise that right turn travel cannot be allowed. In this embodiment, the "adjacent oncoming vehicle" is a vehicle in the oncoming traffic lane present on the near side of the intended travel trajectory. Whether or not there is an adjacent oncoming vehicle is determined from the position information of the oncoming vehicle acquired based on the periphery information from the external sensor 11. The determination "adjacent oncoming vehicle not stopped" is made not only when an adjacent oncoming vehicle is traveling, but also when there is no adjacent oncoming vehicle.

In step S9, in continuation from the determination in step S7 that there is a recognition of a passing action by the far-side oncoming vehicle or the determination in step S8 that the adjacent oncoming vehicle has stopped, a right turn allowance signal is outputted and the process advances to step S10 on the premise that the stopped state of the far-side oncoming vehicle will continue and right turn travel is possible.

In step S10, in continuation from the outputting of a right turn allowance signal in step S9, a travel control command that causes right turn travel across the oncoming traffic lane to be performed is outputted, and the process advances to END. Due to this action, the host vehicle travels along the intended travel trajectory and right turn travel by autonomous driving is carried out. At this time, in order to be aware of blind spots created by the stopping of the far-side oncoming vehicle, the travel speed during right turn travel is set to a regulated speed (for example, about 5 km/h) that is lower than the pre-set reference speed.

In step S11, in continuation from the determination in step S5 that there is no far-side oncoming vehicle, a right turn allowance signal is outputted and the process advances to step S12 on the premise that there is nothing to cause interference with the right turn travel of the host vehicle and right turn travel is possible.

In step S12, in continuation from the outputting of the right turn allowance signal in step S11, a travel control command that causes right turn travel across the oncoming traffic lane to be performed is outputted and the process advances to END. Due to this action, the host vehicle travels along the intended travel trajectory and right turn travel by autonomous driving is executed. At this time, a blind spot is not created because there is no far-side oncoming vehicle; therefore, the travel speed during right turn travel is set to the pre-set reference speed (for example, about 10 km/h), and speed regulation is not performed.

In step S13, in continuation from the determination in step S2 that there is an oncoming vehicle in the intended travel trajectory, the determination in step S4 that a non-green-illuminated state is recognized, the determination in step S6 that the far-side oncoming vehicle is traveling, or the determination in step S8 that the adjacent oncoming vehicle has not stopped, drive control for the host vehicle is set to manual driving by the driver on the premise that right turn travel cannot be allowed, and the process advances to END. In this embodiment, "manual driving" may denote driving in which steering and acceleration control of the host vehicle are all performed by an operation on the part of the driver, or may denote driving in which steering of the host vehicle is executed by autonomous driving based on a travel control command and acceleration control is performed by an operation on the part of the driver. In other words, "autonomous driving" in the first embodiment means that without any reliance on an operation on the part of the driver, steering and acceleration control of the host vehicle are performed by actions of the drive actuator 16 based on a travel control command, and "manual driving" means steering and acceleration control of the host vehicle are performed with at least any one of the operations on the part of the driver.

Next, the action shall be described. First, a flow of right/left turning control in a comparative example and problems therewith shall be described, and a right/left turn allowing action in the method and right-left turn determination device for a drive-assisted vehicle of the first embodiment shall then be described.

### [Flow of the Right/Left Turning Control in Comparative Example And Problems Therewith]

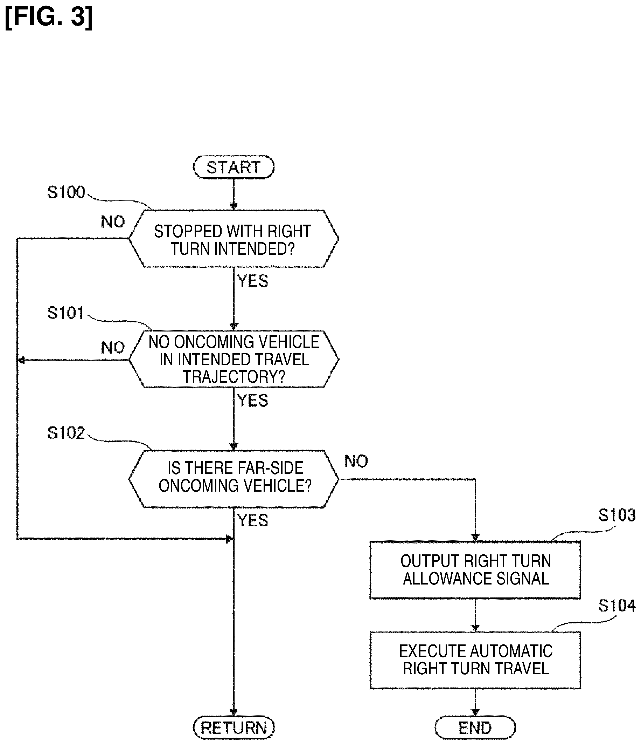

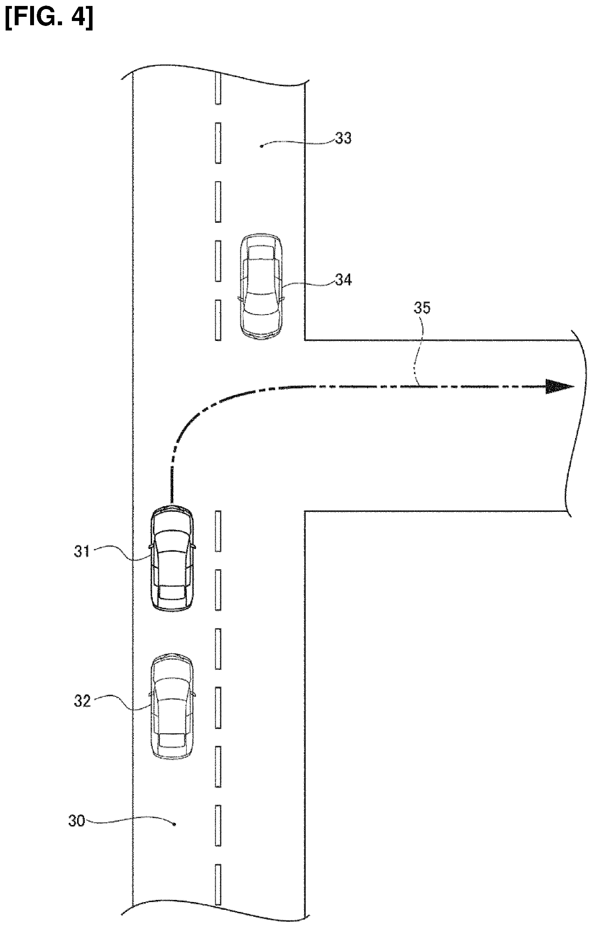

Figure 3 is a flowchart of a flow of the right/left turning control in a comparative example. Figure 4 is a diagram of a situation at an intersection at which a host vehicle is in a stopped state with a right turn being intended. The flow of right/left turning control in the comparative example and the problems therewith are described below based on Figures 3 and 4.

When a host vehicle 31 makes a right turn across an oncoming traffic lane 33 at an intersection, etc., as shown in Figure 4, a straight-advancing oncoming vehicle (far-side oncoming vehicle 34) is a so-called lead vehicle, and as a rule, the forward travel of this far-side oncoming vehicle 34 must not be impeded by the host vehicle 31.

In view of this, in the right/left turn control process of the comparative example, right/left turning control is performed according to the flow shown in the flowchart of Figure 3. Specifically, in step S100, a determination is made as to whether or not the stop of the host vehicle 31 is a stop with a right turn being intended. When the determination is YES (a right turn is intended), the process advances to step S101. When the determination is NO (a right turn is not intended), step S100 is repeated on the premise that right turn travel is not intended.

In step S101, in continuation from the determination in step S100 that the host vehicle has stopped with a right turn intended, an intended travel trajectory 35 for the host vehicle 31 during a right turn is looked up, and a determination is made as to whether or not there is an oncoming vehicle in the intended travel trajectory 35. When the determination is YES (there is no oncoming vehicle), the process advances to step S102. When the determination is NO (there is an oncoming vehicle), there is a possibility of interfering with the travel of the oncoming vehicle should right turn travel be performed, and the process therefore advances to RETURN on the premise that right turn travel cannot be allowed.

In step S102, in continuation from the determination in step S101 that there is no oncoming vehicle in the intended travel trajectory 35, a determination is made as to whether or not there is a far-side oncoming vehicle 34. When the determination is YES (there is a far-side oncoming vehicle), the process advances to RETURN on the premise that right turn travel cannot be allowed. When the determination is NO (there is no far-side oncoming vehicle), the process advances to step S103.

In step S103, in continuation from the determination in step S102 that there is no far-side oncoming vehicle 34, a right turn allowance signal is outputted and the process advances to step S104 on the premise that there is nothing to cause interference with the right turn travel of the host vehicle 31 and right turn travel is possible.

In step S104, in continuation from the outputting of the right turn allowance signal in step S103, a travel control command that causes right turn travel across the oncoming traffic lane 33 to be performed is outputted and the process advances to END.

Due to this configuration, a right turn is allowed and right turn travel across the oncoming traffic lane 33 by autonomous driving is possible only when there is no far-side oncoming vehicle 34 on the far side of the intended travel trajectory 35. Therefore, in a scenario in which there is a far-side oncoming vehicle 34 as shown in Figure 4, the host vehicle 31 remains stopped until the far-side oncoming vehicle 34 has completely passed by.

By contrast, a technology has recently come to be known in the autonomous driving field in which, when an oncoming vehicle is going to turn right at an intersection, the path of forward progress is yielded to the oncoming vehicle (the oncoming vehicle is allowed to perform right turn travel before the host vehicle travels straight forward), whereby delays in the host traffic lane and the oncoming traffic lane are prevented and a smooth traffic environment is achieved.

Specifically, a technology is disclosed in which the host vehicle stops within the intersection so as to not interfere with the travel of the oncoming vehicle, which is entering the intersection with a right turn. Also disclosed is a technology in which a front display prompting the oncoming vehicle to make a right turn is performed when it is determined that the host vehicle will stop within the intersection.

However, these technologies pertain to the side that yields the path of forward progress to an oncoming vehicle planning a right turn, there having yet to be disclosed any technology for the yielded-to side (right turning side) has not been disclosed. In other words, when the host vehicle 31 has stopped with right turn travel being intended as shown in, for example, Figure 4, and the far-side oncoming vehicle 34 stops to yield the path of forward progress to the host vehicle 31, it is desirable for the host vehicle 31 to perform right turn travel along the intended travel trajectory 35 in order to prevent a delay to a following vehicle 32 behind the host vehicle 31 or a delay in the oncoming traffic lane 33.

However, in the right/left turning control process of the comparative example shown in Figure 3, a right turn is allowed when there is no far-side oncoming vehicle 34 (lead vehicle), and the host vehicle 31 therefore remains stopped until the far-side oncoming vehicle 34 has completely passed by. As a result, there is a possibility of causing a delay in a host traffic lane 30 and the oncoming traffic lane 33.

### [Right/Left Turn Allowing Action]

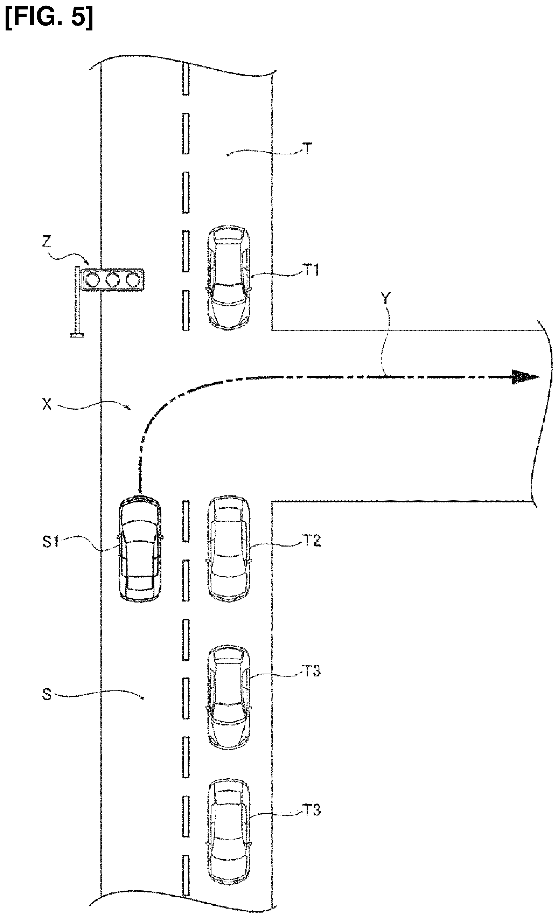

Figure 5 is a diagram of a situation at an intersection at which a drive-assisted vehicle, to which the right/left turn determination method of the first embodiment is applied, is in a stopped state with a right turn being intended. The right turn allowing action of the first embodiment is described below based on Figures 2 and 5.

As shown in Figure 5, a case is imagined in which a drive-assisted vehicle (referred to below as the "host vehicle S1"), capable of the autonomous driving to which the right/left turn determination method of the first embodiment has been applied, turning right at an intersection X along an intended travel trajectory Y.

In step S1 of the flowchart shown in Figure 2, a determination is made as to whether or not the host vehicle S1 has stopped with right turn travel being intended. In the case shown in Figure 5, the vehicle has stopped with right turn travel being intended; therefore, the process advances to step S2 and a determination is made as to whether or not there is no oncoming vehicle in the intended travel trajectory Y.

In Figure 5, there is no oncoming vehicle in the intended travel trajectory Y because there is no vehicle stopped in the intersection X. Therefore, the process advances to step S3. When there is an oncoming vehicle in the intended travel trajectory Y, the process advances to step S13 so that there will be no interference with the travel of the oncoming vehicle, driving is set to manual, and driving is entrusted to the driver.

In step S3, a determination is made as to whether or not there is a traffic light Z ahead of the host vehicle S1, and in step S4, a determination is made as to whether or not this traffic light Z is in a green-illuminated state. Specifically, if there is a traffic light Z in a green-illuminated state, the process advances from step S3, to step S4, to step S5. In, *inter alia,* an intersection with no traffic light Z, the process advances from step S3 to step S5. In a case where there is a traffic light Z but not in a green-illuminated state (i.e., when the traffic light Z is illuminated as yellow or red), the host vehicle S1 must stop; therefore, the process advances from step S4 to step S13, driving is set to manual, and driving is entrusted to the driver.

By contrast, in the case shown in Figure 5, because there is a traffic light Z in a green-illuminated state, the process advances from step S3, to step S4, to step S5, and whether or not there is a far-side oncoming vehicle T1 is determined. In the case shown in Figure 5, there is a far-side oncoming vehicle T1 on the far side of the intended travel trajectory Y. Therefore, the process advances from step S5 to step S6, and determination is made as to whether or not this far-side oncoming vehicle T1 has stopped.

In the case shown in Figure 5, there is a delay in an oncoming traffic lane T, and an adjacent oncoming vehicle T2 on the near side of the intended travel trajectory Y has stopped, as has a vehicle T3 ahead of this adjacent oncoming vehicle T2. Therefore, the far-side oncoming vehicle T1 also stops without advancing forward. Due to these actions, the far-side oncoming vehicle T1 is determined to have stopped, and the process advances from step S6 to step S7. When the far-side oncoming vehicle T1 has not stopped, the process advances from step S6 to step S13, driving is set to manual, and driving is entrusted to the driver, on the premise that there is a possibility of interfering with the travel of the far-side oncoming vehicle T1 should the host vehicle S1 turn right.

When the process has advanced to step S7, a determination is made as to whether or not a passing action by the far-side oncoming vehicle T1 has been recognized. When a determination can be made that the passing action has been recognized, the process advances from step S7, to step S9, to step S10, a right turn allowance signal is outputted, and right turn travel of the host vehicle S1 is executed, on the premise that the driver of the far-side oncoming vehicle T1 intends to give priority to the right turn travel of the host vehicle S1. When a determination cannot be made that a passing action by the far-side oncoming vehicle T1 has been recognized, the process advances to step S8 and a determination is made as to whether or not the adjacent oncoming vehicle T2 has stopped.

If the adjacent oncoming vehicle T2 has stopped as shown in Figure 5, the far-side oncoming vehicle T1, unable to set off, maintains a stopped state; therefore, the process advances from step S9 to step S10, a right turn allowance signal is outputted, and right turn travel of the host vehicle S1 by automatic travel is executed. When the adjacent oncoming vehicle T2 sets off or when there is no adjacent oncoming vehicle T2, the process advances to step S13, driving is set to manual, and driving is entrusted to the driver, on the premise that there is a possibility that the far-side oncoming vehicle T1 will set off and enter the intersection.

Furthermore, unlike the case shown in Figure 5, when there is no far-side oncoming vehicle T1, the process advances from step S5, to step S11, to step S12, a right turn allowance signal is outputted, and right turn travel of the host vehicle S1 by automatic travel is executed.

Thus, in the right/left turn determination method of the first embodiment, should there be a far-side oncoming vehicle T1 on the far side of the intended travel trajectory Y when the host vehicle S1 has stopped with right turn travel being intended, the stopped state of the far-side oncoming vehicle T1 is determined, and right turn travel of the host vehicle S1 can be allowed when the far-side oncoming vehicle T1 has stopped.

Due to this configuration, a determination to allow right/left turn travel across the oncoming traffic lane T can be appropriately made, and when the far-side oncoming vehicle T1 has yielded the path of forward progress to the host vehicle S1, right turn travel of the host vehicle S1 can be executed even if the far-side oncoming vehicle T1 is a leading vehicle. Consequently, needless stopping of the host vehicle S1 can be eliminated, and delays in the host traffic lane S and in oncoming traffic lane T can be prevented.

In the first embodiment, a right turn allowance signal is outputted when the far-side oncoming vehicle T1 has stopped and a passing action by the far-side oncoming vehicle T1 is recognized. Specifically, a right turn allowance signal is outputted not just when the T1 is confirmed to have stopped, but also upon there having been confirmation of behavior displaying the intent to yield the path of forward progress by the driver of the far-side oncoming vehicle T1. It is thereby possible to more accurately determine an intent by the far-side oncoming vehicle T1 to yield the path of forward progress to the host vehicle S1, and to determine that a right turn can be allowed.

When the adjacent oncoming vehicle T2 has stopped in a case in which the far-side oncoming vehicle T1 has stopped but a passing action by the far-side oncoming vehicle T1 cannot be recognized, a right turn allowance signal is outputted. Specifically, a right turn allowance signal is outputted not just when a stop of the far-side oncoming vehicle T1 is confirmed, but also upon confirmation that the far-side oncoming vehicle T1 will continue to be stopped. It is thereby possible to appropriately determine that the stopped state of the far-side oncoming vehicle T1 will continue, and to make a determination to allow a right turn.

Furthermore, in the first embodiment, a right turn allowance signal is outputted when there is a traffic light Z ahead of the host vehicle S1 and the green-illuminated state of this traffic light Z is recognized. A determination to allow right turn travel can thereby be appropriately made in accordance with the traffic light Z located ahead of the host vehicle S1.

In this the first embodiment, a right turn allowance signal is outputted even when the far-side oncoming vehicle T1 has stopped, and when right turn travel across the oncoming traffic lane T is performed, the travel speed during the right turn travel is set to a regulated speed that is lower than a pre-set reference speed. A right turn allowance signal is outputted when there is no far-side oncoming vehicle T1, and when right turn travel across the oncoming traffic lane T is performed, the travel speed during the right turn travel is set to the pre-set reference speed. Due to this configuration, the host vehicle can travel while being aware of a blind spot created by the far-side oncoming vehicle T1; e.g., while being aware of the presence of a two-wheeled vehicle entering the intersection X through the blind spot created by the far-side oncoming vehicle T1.

In this the first embodiment, in cases in which there is an oncoming vehicle in the intended travel trajectory Y, a far-side oncoming vehicle T1 is traveling, a traffic light Z is in a non-green-illuminated state, or an adjacent oncoming vehicle T2 is in a non-stopped state, the process advances to step S13, and driving is set to manual driving to be performed by the driver occupying the host vehicle S1. Due to these actions, the right turn travel of the host vehicle S1 is entrusted to the driving on the part of the driver, and right turn travel can be executed according to the driver's determination.

Next, effects shall be described. The effects presented below are achieved with the method and right-left turn determination device for a drive-assisted vehicle of the first embodiment.

(1) This right-left turn determination method for a drive-assisted vehicle, which comprises an onboard sensor (external sensor 11, internal sensor 12) that acquires information about a periphery of a host vehicle S1 and host vehicle information, and a controller (vehicle travel control unit 22) that performs an allowance determination for right/left turn travel across an oncoming traffic lane T based on the information acquired by the onboard sensor (external sensor 11, internal sensor 12), is configured such that:
a determination is made as to whether or not the host vehicle S1 has stopped with the right/left turn travel being intended (step S1);
when a right/left turn stop determination is made for the host vehicle S1, a determination is made as to whether or not there is an oncoming vehicle in an intended travel trajectory Y of the host vehicle S1 (step S2);
when the oncoming vehicle is determined to not be present in the intended travel trajectory Y, a determination is made as to whether or not a far-side oncoming vehicle T1 in the oncoming traffic lane T, which is present on a far side of the intended travel trajectory Y, has stopped (step S5, step S6); and
when the far-side oncoming vehicle T1 is determined to have stopped, the right/left turn travel is allowed (step S9).

It is thereby possible to appropriately perform a determination of whether to allow right/left turning travel across an oncoming traffic lane T.

(2) This method is also configured such that: when a determination is made that the far-side oncoming vehicle T1 has stopped, a determination is made as to whether or not an adjacent oncoming vehicle T2 in the oncoming traffic lane T present on the near side of the intended travel trajectory Y has stopped (step S8); and
when a determination is made that the adjacent oncoming vehicle T2 has stopped, right/left turn travel is allowed (step S9).

It is thereby possible, in addition to the effect of (1), to appropriately determine a yielding of the path of forward progress to the host vehicle S1 by the far-side oncoming vehicle T1 and determine a right turn allowance.

(3) This method is also configured such that: when a determination is made that the far-side oncoming vehicle T1 has stopped, a determination is made as to whether or not a passing action performed by the far-side oncoming vehicle T1 has been recognized (step S7); and
when the passing action has been recognized, the right/left turn travel is allowed (step S9).

In addition to the effect of (1), it is thereby possible to more accurately determine the intent by the far-side oncoming vehicle T1 to yield the path of forward progress to the host vehicle S1 and determine a right turn allowance.

(4) This method is also configured such that: when a determination is made that the far-side oncoming vehicle T1 has stopped, a determination is made as to whether or not there is a traffic light Z present ahead of the host vehicle S1 (step S3);
when the traffic light Z is determined to be present, a determination is made as to whether or not a green-illuminated state of the traffic light Z has been recognized (step S4); and
when the green-illuminated state has been recognized, the right/left turn travel is allowed (step S9).

In addition to the effects of any of (1) to (3), it is thereby possible to appropriately perform a determination to allow right turn travel in accordance with the traffic light Z located ahead of the host vehicle S1.

(5) This method is also configured such that: the host vehicle S1 is an autonomously driven vehicle in which the right/left turn travel is performed automatically based on a signal from the controller (vehicle travel control unit 22); and
when a determination is made to allow the right/left turn travel, the right/left turn travel is executed automatically, and a travel speed during the right/left turn travel when the far-side oncoming vehicle T1 is present is set lower than a travel speed during the right/left turn travel when the far-side oncoming vehicle T1 is not present.

It is thereby possible to perform travel with awareness having been given to a blind spot created by the far-side oncoming vehicle T1 during the right/left turn travel.

(6) This right-left turn determination device for a drive-assisted vehicle, which comprises an onboard sensor (external sensor 11, internal sensor 12) that acquires information about a periphery of a host vehicle S1 and host vehicle information, and a controller (vehicle travel control unit 22) that performs an allowance determination for right/left turn travel across an oncoming traffic lane T based on the information acquired by the onboard sensor (external sensor 11, internal sensor 12), is configured such that the controller (vehicle travel control unit 22) comprises:
a host vehicle stop determination unit 23 that determines whether or not the host vehicle S1 has stopped with the right/left turn travel being intended;
an oncoming vehicle determination unit 24 that determines whether or not there is an oncoming vehicle in an intended travel trajectory Y of the host vehicle S1 when the host vehicle S1 is determined by the host vehicle stop determination unit 23 to have stopped with the right/left turn travel being intended;
an oncoming vehicle stop determination unit 25 that determines whether or not a far-side oncoming vehicle T1 in the oncoming traffic lane T present on a far side of the intended travel trajectory Y has stopped when the oncoming vehicle is determined by the oncoming vehicle determination unit 24 to not be present in the intended travel trajectory Y; and
a right/left turn allowance unit 26 that allows the right/left turn travel when the far-side oncoming vehicle T1 is determined by the oncoming vehicle stop determination unit 25 to have stopped.

It is thereby possible to appropriately perform a determination to allow right/left turn travel across the oncoming traffic lane T.

The method and right-left turn determination device for a drive-assisted vehicle of the present invention were described above based on the first embodiment, but this example is not provided by way of limitation on the specific configuration; modifications, additions, and other changes to the design are allowed as long as there is no deviation from the scope of the invention as in the claims.

In the first embodiment, an example was presented in which, in addition to the stop determination for the far-side oncoming vehicle T1 being performed, a passing action performed by the far-side oncoming vehicle T1 is recognized or a right turn allowance determination is made when the adjacent oncoming vehicle T2 is determined to have stopped. In other words, in the first embodiment, a right turn is not allowed merely due to the far-side oncoming vehicle T1 being determined to have stopped. However, this example is not provided by way of limitation. For example, a right turn may be allowed at a timing at which the far-side oncoming vehicle T1 is determined to have stopped. Furthermore, the invention may be configured such that a right turn is not allowed if the adjacent oncoming vehicle T2 is not determined to have stopped, regardless of whether or not there is a determination that a passing action has been recognized. Alternatively, the invention may be configured such that a right turn is not allowed if a passing action of the far-side oncoming vehicle T1 is not recognized, regardless of whether or not there is a stop determination for the adjacent oncoming vehicle T2.

In other words, the invention may be configured such that a right turn allowance is performed in accordance with the determination result of the stop determination for the far-side oncoming vehicle T1, or the invention may be configured such that a determination is made only as to whether or not there a passing action has been recognized after the far-side oncoming vehicle T1 has stopped, and a right turn allowance is performed in accordance with this determination result. Furthermore, the invention may be configured such that after a stop determination for the far-side oncoming vehicle T1, a determination is made only that an adjacent oncoming vehicle has stopped and a right turn allowance is performed in accordance with this determination result.

The invention can also be configured such that a right turn allowance determination is performed without performing determinations of whether or not there is a traffic light Z ahead of the host vehicle S1 or whether or not there is a recognition of a green-illuminated state of the traffic light Z.

In the first embodiment, an example was presented in which when a right turn allowance determination is performed, a travel control command is outputted and right turn travel by autonomous driving is executed, and when a right turn allowance determination is not performed, driving is set to manual. However, this example is not provided by way of limitation; for example, in cases such as when the invention is applied to a vehicle not equipped with an autonomous driving function, after a right turn allowance determination has been performed, the driver may be notified of the determination result, by a sound, a display, a voice, etc., indicating that a right turn is allowed.

In the first embodiment, an example was presented in which when the host vehicle S1 is planning right turn travel at the intersection X, an allowance determination for this right turn is performed. However, scenarios in which a right/left turn determination is performed are not limited to this example. For example, the invention can be applied to a scenario such as when the host vehicle will cross the oncoming traffic lane to enter a parking lot, etc., adjacent to the oncoming traffic lane.

In the first embodiment, an example was presented of a scenario in which left-side traffic is used as a reference and right turn travel is performed across an oncoming traffic lane. However, this embodiment is not provided by way of limitation; the right/left turn determination method of the present invention can also be applied to a case of right-side traffic, in a scenario involving left turn travel across an oncoming traffic lane. In other words, the right/left turn determination method and right/left turn determination device of the present invention can be applied in the case of right/left turn travel across an oncoming traffic lane.

## Claims

1. A right-left turn determination method for a drive-assisted vehicle comprising an onboard sensor that acquires information about a periphery of a host vehicle (S1) and host vehicle information, and a controller (22) that performs an allowance determination for right/left-turn travel across an oncoming traffic lane during a stop in which the right/left-turn travel is intended based on the information acquired by the onboard sensor,
the right-left turn determination method for the drive-assisted vehicle comprising:
determining (S1) as to whether or not the host vehicle (S1) has stopped with the right/left-turn travel being intended;
determining (S2) as to whether or not there is an oncoming vehicle in an intended travel trajectory (Y) of the host vehicle (S1) when a right/left-turn stop determination is made for the host vehicle;
determining (S5, S6) as to whether or not a far-side oncoming vehicle (T1) which is a first vehicle in the oncoming traffic lane has stopped when the oncoming vehicle is determined to not be present in the intended travel trajectory;
**characterized by**
determining (S8) as to whether or not an adjacent oncoming vehicle (T2) in the oncoming traffic lane present on a near side of the intended travel trajectory (Y) has stopped when a determination is made that the far-side oncoming vehicle (T1) has stopped;
allowing (S9) the right/left-turn travel when:
the far-side oncoming vehicle (T1) is determined to have stopped while the host vehicle (S1) has stopped with the right/left-turn travel being intended, and
a determination is made that the adjacent oncoming vehicle (T2) has stopped; and
executing the right/left-turn travel.

2. The right-left turn determination method for a drive-assisted vehicle according to claim 1, further comprising:
determining as to whether or not a passing action performed by the far-side oncoming vehicle (T1) has been recognized when a determination is made that the far-side oncoming vehicle (T1) has stopped; and
allowing the right/left turn travel when the passing action has been recognized.

3. The right-left turn determination method for a drive-assisted vehicle according to any one of claims 1 to 2, further comprising:
determining as to whether or not there is a traffic light present ahead of the host vehicle (S1) when a determination is made that the far-side oncoming vehicle (T1) has stopped;
determining as to whether or not a green-illuminated state of the traffic light has been recognized when the traffic light is determined to be present; and
allowing the right/left turn travel when the green-illuminated state has been recognized.

4. The right-left turn determination method for a drive-assisted vehicle according to any one of claims 1 to 3, further comprising:
the host vehicle (S1) being an autonomously driven vehicle and autonomously performing the right/left turn travel based on a signal from the controller; and
when a determination is made to allow the right/left turn travel, autonomously executing the right/left turn travel and setting a travel speed during the right/left turn travel when the far-side oncoming vehicle (T1) is present to be lower than a travel speed during the right/left turn travel when the far-side oncoming vehicle (T1) is not present.

5. A right-left turn determination device for a drive-assisted vehicle, comprising:
an onboard sensor that acquires information about a periphery of a host vehicle (S1) and host vehicle information; and
a controller (22) that performs an allowance determination for right/left turn travel across an oncoming traffic lane based on the information acquired by the onboard sensor,
the controller (22) comprises:
a host vehicle stop determination unit (23) that determines whether or not the host vehicle (S1) has stopped with the right/left turn travel being intended;
an oncoming vehicle determination unit (24) that determines whether or not there is an oncoming vehicle in an intended travel trajectory (Y) of the host vehicle (S1) when the host vehicle (S1) is determined by the host vehicle stop determination unit (23) to have stopped with the right/left turn travel being intended;
an oncoming vehicle stop determination unit (25) that determines whether or not a far-side oncoming vehicle (T1) has stopped in the oncoming traffic lane present on a far side of the intended travel trajectory (Y) when the oncoming vehicle is determined by the oncoming vehicle determination unit (24) to not be present in the intended travel trajectory; and
**characterized in that**
the controller (22) is further configured to:
determine as to whether or not an adjacent oncoming vehicle (T2) in the oncoming traffic lane present on a near side of the intended travel trajectory (Y) has stopped when a determination is made that the far-side oncoming vehicle (T1) has stopped; and
the controller (22) further comprises a right/left turn allowance unit (26) that allows the right/left turn travel when:
the far-side oncoming vehicle (T1) is determined by the oncoming vehicle stop determination unit (25) to have stopped, and
a determination is made that the adjacent oncoming vehicle (T2) has stopped.

## Patentansprüche

1. Verfahren zum Entscheiden einer Fahrbewegung zum Rechts-/Linksabbiegen für ein Fahrzeug mit Fahrhilfe, das einen fahrzeuginternen Sensor, der Informationen über die Umgebung eines Host-Fahrzeugs (S1) und Informationen des Host-Fahrzeugs erfasst, und eine Steuereinheit (22) aufweist, die eine Feststellung der Zulässigkeit einer Fahrbewegung zum Rechts-/Linksabbiegen über eine Gegenfahrbahn während eines Halts, in dem die Fahrbewegung zum Rechts-/Linksabbiegen beabsichtigt ist, beruhend auf den durch den fahrzeuginternen Sensor erfassten Informationen ausführt,
wobei das Verfahren zum Entscheiden einer Fahrbewegung zum Rechts-/Linksabbiegen für das Fahrzeug mit Fahrhilfe aufweist:
Feststellen (S1), ob das Host-Fahrzeug (S1) angehalten hat, wobei die Fahrbewegung zum Rechts-/Linksabbiegen beabsichtigt ist;
Feststellen (S2), ob ein entgegenkommendes Fahrzeug in einer beabsichtigten Fahrbewegungsbahn (Y) des Host-Fahrzeugs (S1) gibt, wenn eine Feststellung des Anhaltens des Rechts-/Linksabbiegens für das das Host-Fahrzeug getroffen wird;
Feststellen (S5, S6), ob ein rückseitiges entgegenkommendes Fahrzeug (T1), das ein erstes Fahrzeug auf der Gegenfahrbahn ist, angehalten hat, wenn festgestellt worden ist, dass das entgegenkommende Fahrzeug nicht in der beabsichtigten Fahrbewegungsbahn vorhanden ist;
**gekennzeichnet durch**
Feststellen (S8), ob ein benachbartes entgegenkommendes Fahrzeug (T2) auf der Gegenfahrbahn, das auf einer Vorderseite der beabsichtigten Fahrbewegungsbahn (Y) vorhanden ist, angehalten hat, wenn eine Feststellung getroffen worden ist, dass das rückseitige entgegenkommende Fahrzeug (T1) angehalten hat;
Zulassen (S9) der Fahrbewegung zum Rechts-/Linksabbiegen, wenn:
festgestellt wird, dass das rückseitige entgegenkommende Fahrzeug (T1) angehalten hat, während das Host-Fahrzeug (S1) angehalten hat, wobei die Fahrbewegung zum Rechts-/Linksabbiegen beabsichtigt ist, und
eine Feststellung getroffen wird, dass das benachbarte entgegenkommende Fahrzeug (T2) angehalten hat; und Ausführen der Fahrbewegung zum Rechts-/Linksabbiegen.

2. Verfahren zum Entscheiden einer Fahrbewegung zum Rechts-/Linksabbiegen für ein Fahrzeug mit Fahrhilfe nach Anspruch 1, das ferner aufweist:
Feststellen, ob ein durch das rückseitige entgegenkommende Fahrzeug (T1) durchgeführter Vorbeifahrvorgang erkannt worden ist, wenn eine Feststellung getroffen worden ist,
dass das rückseitige entgegenkommende Fahrzeug (T1) angehalten hat; und
Zulassen der Fahrbewegung zum Rechts-/Linksabbiegen, wenn der Vorbeifahrvorgang erkannt worden ist.

3. Verfahren zum Entscheiden einer Fahrbewegung zum Rechts-/Linksabbiegen für ein Fahrzeug mit Fahrhilfe nach einem der Ansprüche 1 bis 2, das ferner aufweist:
Feststellen, ob eine Ampel vor dem Host-Fahrzeugs (S1) vorhanden ist, wenn eine Feststellung getroffen wird, dass das rückseitige entgegenkommende Fahrzeug (T1) angehalten hat;
Feststellen, ob ein Grün-Beleuchtungszustand der Ampel erkannt worden ist, wenn festgestellt worden ist, dass die Ampel vorhanden ist; und
Zulassen der Fahrbewegung zum Rechts-/Linksabbiegen, wenn der Grün-Beleuchtungszustand erkannt worden ist.

4. Verfahren zum Entscheiden einer Fahrbewegung zum Rechts-/Linksabbiegen für ein Fahrzeug mit Fahrhilfe nach einem der Ansprüche 1 bis 3, das ferner aufweist:
wobei das Host-Fahrzeug (S1) ein autonom fahrendes Fahrzeug ist und beruhend auf einem Signal von der Steuereinheit autonom die Fahrbewegung zum Rechts-/Linksabbiegen durchführt; und
wenn eine Feststellung getroffen wird, die Fahrbewegung zum Rechts-/Linksabbiegen zuzulassen, autonomes Ausführen der Fahrbewegung zum Rechts-/Linksabbiegen und Einstellen einer Fahrgeschwindigkeit während der Fahrbewegung zum Rechts-/Linksabbiegen, wenn das rückseitige entgegenkommende Fahrzeug (T1) vorhanden ist, die niedriger ist als eine Fahrgeschwindigkeit während der Fahrbewegung zum Rechts-/Linksabbiegen, wenn das rückseitige entgegenkommende Fahrzeug (T1) nicht vorhanden ist.

5. Vorrichtung zur Entscheidung einer Fahrbewegung zum Rechts-/Linksabbiegen für ein Fahrzeug mit Fahrhilfe, mit:
einem fahrzeuginternen Sensor, der Informationen über die Umgebung eines Host-Fahrzeugs (S1) und Informationen des Host-Fahrzeugs erfasst; und
einer Steuereinheit (22), die beruhend auf den durch den fahrzeuginternen Sensor erfassten Informationen eine Feststellung einer Zulässigkeit einer Fahrbewegung zum Rechts-/Linksabbiegen über eine Gegenfahrbahn ausführt,
wobei die Steuereinheit (22) aufweist:
eine Einheit (23) zur Feststellung des Anhaltens des Host-Fahrzeugs, die feststellt, ob das Host-Fahrzeug (S1) angehalten hat, wobei die Fahrbewegung zum Rechts-/Linksabbiegen beabsichtigt ist;
eine Einheit (24) zur Feststellung eines entgegenkommenden Fahrzeugs, die feststellt, ob es ein entgegenkommendes Fahrzeug in einer beabsichtigten Fahrbewegungsbahn (Y) des Host-Fahrzeugs (S1) gibt, wenn durch das Einheit (23) zur Feststellung des Anhaltens des Host-Fahrzeugs festgestellt worden ist, dass das Host-Fahrzeug (S1) angehalten hat,
wobei die Fahrbewegung zum Rechts-/Linksabbiegen beabsichtigt ist;
eine Einheit (25) zur Feststellung des Anhaltens eines entgegenkommenden Fahrzeugs, die feststellt, ob ein rückseitiges entgegenkommendes Fahrzeug (T1) auf der Gegenfahrbahn angehalten hat, das auf einer Rückseite der beabsichtigten Fahrbewegungsbahn (Y) vorhanden ist, wenn durch die Einheit (24) zur Feststellung eines entgegenkommenden Fahrzeugs festgestellt worden ist, dass das entgegenkommende Fahrzeug nicht in der beabsichtigten Fahrbewegungsbahn vorhanden ist; und
**dadurch gekennzeichnet dass**
die Steuereinheit (22) ferner konfiguriert ist:
festzustellen, ob ein benachbartes entgegenkommendes Fahrzeug (T2) auf der Gegenfahrbahn, das auf einer Vorderseite der beabsichtigten Fahrbewegungsbahn (Y) vorhanden ist, angehalten hat, wenn eine Feststellung getroffen worden ist, dass das rückseitige entgegenkommende Fahrzeug (T1) angehalten hat; und
die Steuereinheit (22) ferner eine Einheit (26) zur Zulassung eines Rechts-/Linksabbiegens aufweist, die die Fahrbewegung zum Rechts-/Linksabbiegen zulässt, wenn:
durch die Einheit (25) zur Feststellung des Anhaltens eines entgegenkommenden Fahrzeugs festgestellt worden ist, dass das rückseitige entgegenkommende Fahrzeug (T1) angehalten hat, und
eine Feststellung getroffen wird, dass das benachbarte entgegenkommende Fahrzeug (T2) angehalten hat.

## Revendications

1. Procédé de détermination de virage à gauche/à droite pour un véhicule à conduite assistée comprenant un capteur embarqué acquérant des informations sur l'environnement d'un véhicule hôte (S1) et des informations de véhicule hôte, et un contrôleur (22) effectuant une détermination de possibilité de virage à gauche/à droite sur une voie à circulation en sens inverse pendant un arrêt où un virage à gauche/à droite est envisagé, sur la base des informations acquises par le capteur embarqué,
ledit procédé de détermination de virage à gauche/à droite pour véhicule à conduite assistée comprenant :
la détermination (S1) si oui ou non le véhicule hôte (S1) s'est arrêté alors que le virage à gauche/à droite était envisagé ;
la détermination (S2) si oui ou non un véhicule arrivant en sens inverse est présenté sur une trajectoire de déplacement envisagé (Y) du véhicule hôte (S1) lorsqu'une détermination d'arrêt avec virage à gauche/à droite est effectuée pour le véhicule hôte ;
la détermination (S5, S6) si oui ou non un véhicule côté distant arrivant en sens inverse (Tl), lequel est un premier véhicule sur la voie à circulation en sens inverse,
s'est arrêté lorsqu'il est déterminé que le véhicule arrivant en sens inverse n'est pas présenté sur la trajectoire de déplacement envisagé ;
**caractérisé par**
la détermination (S8) si oui un non un véhicule adjacent arrivant en sens inverse (T2) sur la voie à circulation en sens inverse présenté sur un côté proche de la trajectoire de déplacement envisagé (Y) s'est arrêté lorsqu'il est déterminé que le véhicule côté distant arrivant en sens inverse (T1) s'est arrêté ;
l'autorisation (S9) du virage à gauche/à droite :
s'il est déterminé que le véhicule côté distant arrivant en sens inverse (T1) s'est arrêté pendant que le véhicule hôte (S1) s'est arrêté alors que le virage à gauche/à droite était envisagé, et
la détermination que le véhicule adjacent arrivant en sens inverse (T2) s'est arrêté ; et
l'exécution du virage à gauche/à droite.

2. Procédé de détermination de virage à gauche/à droite pour un véhicule à conduite assistée selon la revendication 1, comprenant en outre :
la détermination si oui ou non une action de passage effectuée par le véhicule côté distant arrivant en sens inverse (T1) a été reconnue lorsqu'il est déterminé que le véhicule côté distant arrivant en sens inverse (T1) s'est arrêté ; et
l'autorisation du virage à gauche/à droite si l'action de passage a été reconnue.

3. Procédé de détermination de virage à gauche/à droite pour un véhicule à conduite assistée selon la revendication 1 ou la revendication 2, comprenant en outre :
la détermination si oui ou non un feu de circulation est présenté en avant du véhicule hôte (S1) lorsqu'il est déterminé que le véhicule côté distant arrivant en sens inverse (T1) s'est arrêté ;
la détermination si oui ou non un état de lumière verte pour le feu de circulation a été reconnu lorsqu'il est déterminé que le feu de circulation est présenté ; et
l'autorisation du virage à gauche/à droite si l'état de lumière verte a été reconnu.

4. Procédé de détermination de virage à gauche/à droite pour un véhicule à conduite assistée selon l'une des revendications 1 à 3, comprenant en outre :
le véhicule hôte (S1) étant un véhicule à conduite autonome exécutant de manière autonome le virage à gauche/à droite sur la base d'un signal du contrôleur,
si une détermination est exécutée pour autoriser le virage à gauche/à droite, l'exécution autonome du virage à gauche/à droite et le réglage d'une vitesse de déplacement pendant le virage à gauche/à droite si le véhicule côté distant arrivant en sens inverse (T1) est présenté, de sorte que celle-ci soit inférieure à une vitesse de déplacement pendant le virage à gauche/à droite si le véhicule côté distant arrivant en sens inverse (T1) n'est pas présenté.

5. Dispositif de détermination de virage à gauche/à droite pour un véhicule à conduite assistée, comprenant :
un capteur embarqué acquérant des informations sur un environnement d'un véhicule hôte (S1) et des informations de véhicule hôte ; et
un contrôleur (22) effectuant une détermination d'autorisation pour un virage à gauche/à droite sur une voie à circulation en sens inverse sur la base des informations acquises par le capteur embarqué,
ledit contrôleur (22) comprenant :
une unité de détermination (23) d'arrêt de véhicule hôte déterminant si oui ou non le véhicule hôte (S1) s'est arrêté alors que le virage à gauche/à droite était envisagé ;
une unité de détermination (24) de véhicule arrivant en sens inverse déterminant si oui ou non un véhicule arrivant en sens inverse est présenté sur une trajectoire de déplacement envisagé (Y) du véhicule hôte (S1) lorsqu'il est déterminé par l'unité de détermination (23) d'arrêt de véhicule hôte que le véhicule hôte (S1) s'est arrêté alors que le virage à gauche/à droite était envisagé ;
une unité de détermination (25) d'arrêt de véhicule arrivant en sens inverse déterminant si oui ou non un véhicule côté distant arrivant en sens inverse (T1) s'est arrêté sur la voie à circulation en sens inverse, présenté sur un côté distant de la trajectoire de déplacement envisagé (Y), lorsqu'il est déterminé par l'unité de détermination (24) de véhicule arrivant en sens inverse que le véhicule arrivant en sens inverse n'est pas présenté sur la trajectoire de déplacement envisagé ;
**caractérisé en ce que**
le contrôleur (22) est en outre prévu pour :
déterminer si un véhicule adjacent arrivant en sens inverse (T2) sur la voie à circulation en sens inverse, présenté sur un côté proche de la trajectoire de déplacement envisagé (Y), s'est arrêté lorsqu'il est déterminé que le véhicule côté distant arrivant en sens inverse (T1) s'est arrêté ; et
le contrôleur (22) comprend en outre une unité d'autorisation (26) de virage à gauche/à droite autorisant le virage à gauche/à droite :
s'il est déterminé par l'unité de détermination (25) d'arrêt de véhicule arrivant en sens inverse que le véhicule côté distant arrivant en sens inverse (T1) s'est arrêté, et
il est déterminé que le véhicule adjacent arrivant en sens inverse (T2) s'est arrêté.
